# EUROPEAN PATENT SPECIFICATION

(11) **EP 1 207 272 B1**
(45) Date of publication and mention of the grant of the patent: **18.10.2006**
(21) Application number: 01309678.9
(22) Date of filing: 16.11.2001
(51) Int. Cl.: F01D 17/16, F01D 9/04

(54) **Replaceable variable stator vane for gas turbines**
Auswechselbare, verstellbare Leitschaufel für Gasturbinen
Aube de guidage variable et remplaçable pour turbines à gaz

(30) Priority: 17.11.2000 US 715278
(43) Date of publication of application: 22.05.2002
(73) Proprietor: GENERAL ELECTRIC COMPANY, Schenectady, NY 12345 (US)
(72) Inventor: Crum, Gregory Allan, South Carolina 29662 (US); Gagne, Lynn Charles, Simpsonville, South Carolina 29681 (US); Dixon, William Earl, Greer, South Carolina 29650 (US)
(74) Representative: Goode, Ian Roy

(56) References cited:
- DE-B- 1 022 348
- US-A- 1 704 481
- US-A- 2 857 092
- US-A- 2 933 234
- US-A- 3 628 922
- US-A- 3 990 810
- US-A- 4 139 329

## Description

This invention relates to turbomachinery and, specifically, to a new variable stator vane construction for a turbine compressor and related method for removal of existing variable stator vanes and replacement with the new vanes, without having to remove the turbine rotor.

Axial compressors used in gas turbines of the assignee's product line may include as many as eighteen (18) stages, each comprising a bladed disk. In addition, a circumferential array of variable guide vanes are provided at the compressor inlet. The latter serve to adjust the airflow at start-up and provide higher firing temperature at reduced load for regenerative-cycle and combined-cycle applications. These inlet guide vanes are gear actuated from outside the inlet casing, using an annular drive ring, a geared rack, and a drive gear to turn the vanes in unison during operation.

Specifically, the inlet guide vanes are supported in two semi-annular halves, referred to herein as the upper and lower inlet casings. In the illustrative example, four inlet guide vanes are supported in each of eight support segments bolted to the lower inlet casing. While removal and replacement of the inlet guide vanes in the upper inlet casing can be accomplished relatively easily while the upper inlet casing is removed, removal and replacement of the inlet guide vanes in the lower inlet casing, without removal of the rotor, is problematic, due primarily to the extended axial length of the vanes. The latter is necessitated by the requirement that the vane adjustment drive be located outside the casing. Thus, each of the vanes have an integral, extended drive stem that extends through the casing where it mounts the drive gear for engagement with the annular geared rack fixed to the annular drive ring. Removal of the rotor has been required to create the necessary space to remove these extended vanes. The process, however, is complex, time consuming and expensive.

US 4 139 329 describes a vane tip motion transfer device that is capable of accurately transferring a rotating movement from a master control to a pivotal vane tip in a gas turbine engine.

US 3 990 810 discloses a vane assembly for close coupling a compressor turbine and a single stage power turbine of a two shaped gas turbine.

US 2 857 092 discloses variable compressor vanes comprising pivotable inlet guide vanes.

This invention relates to a technique for removing conventional inlet guide vanes, and to a new replacement inlet guide vane assembly that allows reinstalling of the inlet guide vanes in the lower half of the inlet casing, both removal and reinstallation achievable without removing the rotor.

Removal of a conventional inlet guide vanes in accordance with this invention involves removing the external drive gears from the guide vanes in the lower inlet casing, and then cutting the vanes, allowing both cut pieces of each guide vane to be removed from inside the lower inlet casing. This removal procedure is followed for the inlet guide vanes mounted in each of the support segments in the lower inlet casing, segment by segment. Installation of replacement inlet guide vanes without removal of the rotor requires modification of the existing inlet guide vane design, as described further below.

The radially outer, or drive end, of each guide vane will now include a multi-piece drive stem assembly. The shortened radial length of the guide vane stems enables each guide vane to be manually located within the casing, while the additional hardware, including an intermediate jack shaft, drive gear and outer stem piece, may be assembled from outside the inlet casing. That portion of the drive stem integral with the vane has been radially shortened and is provided with splines and flats that mate with a complementary recess in the intermediate jack shaft. The other end of the jack shaft slidably receives the drive gear. An outer stem piece is adapted for installation on the free end of the jack shaft, projecting beyond the drive gear, again with torque-transmitting flats (or hex-shaped head or similar). A radial screw extends from the outer stem piece through the jack shaft, and is threadably receivable in the vane stem, for loosely holding the components together. After all of the vanes are adjusted to the appropriate vane angle, the radial screws are tightened and the outer stem pieces are welded to the drive gear, thus creating a torque transmission path between the drive ring, geared rack, drive gears and the guide vanes.

Thus, in one aspect, the invention relates to a method of removing an inlet guide vane from a lower inlet casing of a compressor, the lower inlet casing adapted to be secured to an upper inlet casing at a horizontal joint, and after removal of the upper half of the inlet casing but with a rotor of the compressor remaining in place, wherein the inlet guide vane is supported between radially inner and outer walls of the lower inlet casing, and further wherein the inlet guide vane is formed with an integral stem that extends radially through the outer wall and supports a drive gear on its outer end that engages an annular gear rack, the method comprising:
a) removing the gear on the radially outer end of the integral stem of the inlet guide vane;
b) shearing the inlet guide vane into two cut portions;
c) removing the cut portions from inside the lower inlet casing; and
d) replacing said inlet guide vane by modified inlet guide vanes, each having a two-piece stem assembly that enables installation without removal of the rotor.

In another aspect, the invention relates to an adjustable inlet guide vane assembly comprising:
an inlet guide vane having a cylindrical stub at a radially inner end thereof and a relatively short integral stem at a radially outer end thereof; wherein said inlet guide vane comprises a two-piece stem assembly that enables installation without removal of a rotor, and
a jack shaft adapted for connection at a radially inner end thereof to a radially outer end of said integral stem such that torque applied to said jack shaft is transmitted to said vane, a radially outer end of the jack shaft adapted to receive a drive gear.

An embodiment of the invention will now be described, by way of example, with reference to the accompanying drawings, in which:
FIGURE 1 is a partial plan view, partly in section, of the lower half of an inlet casing of an axial compressor, taken approximately at the horizontal joint, and illustrating the manner in which the inlet guide vanes are assembled inside an inlet casing;

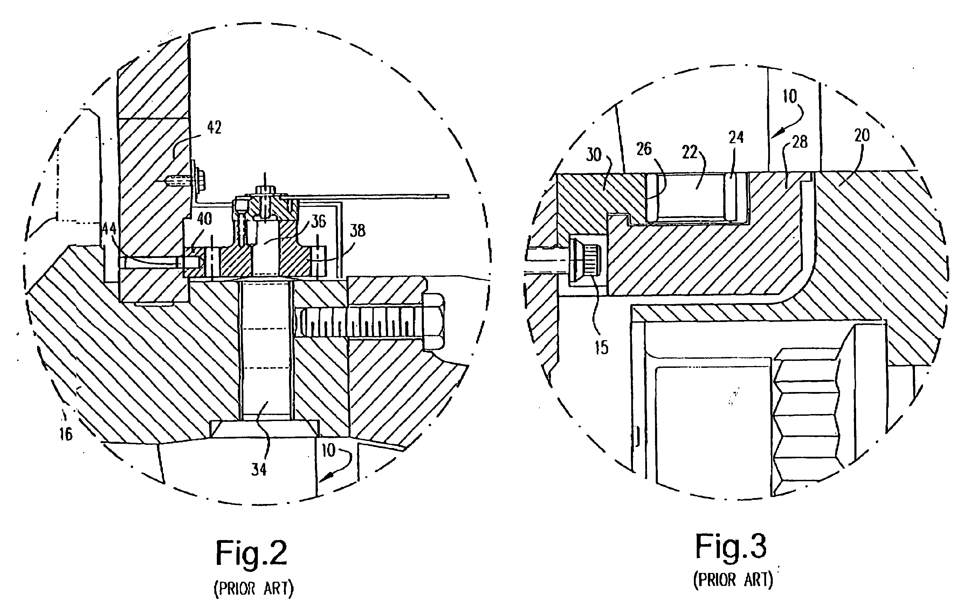

FIGURE 2 is an enlarged detail of the radially outer end of the vane, taken from Figure 1;
FIGURE 3 is an enlarged detail of the radially inner end of vane, taken from Figure 1; and
FIGURE 4 is a partial cross-section of the radially outer end of a new inlet guide vane in accordance with this invention.
FIGURE 5 is an exploded perspective view of a jack shaft and an outer stem piece incorporated in the inlet guide van of figure 4.

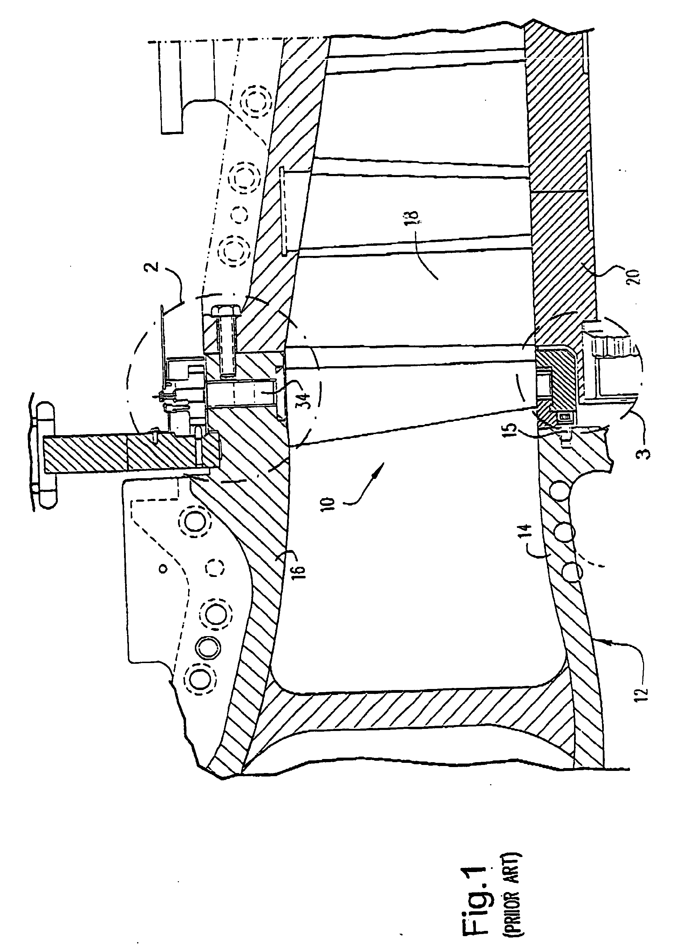

With reference to Figure 1, an inlet guide vane 10 of known construction is supported within a lower inlet casing 12, between radially inner and outer walls 14, 16, respectively. An annular array of the inlet guide vanes is located forward of the zero or first compressor stage 18, surrounding the rotor 20 (partially shown). It will be appreciated that the inlet casing is split into an upper and lower casings, each extending substantially 180°, and each supporting half of the inlet guide vanes. The upper and lower casings are joined together at a horizontal joint. The views shown in all of the Figures are understood to be taken through the lower inlet casing 12, adjacent the horizontal joint.

The radially inner end of each of the inlet guide vanes 10 is formed with a cylindrical stem or stub shaft 22 that is supported in a bushing 24 seated within a hole 26 formed in a support segment 30. It will be understood that by supporting the vanes in this manner within the bushings 24 in holes 26, they are adjustably rotatable about the stub shafts 22. There are eight support segments 30 in the lower inlet casing, collectively extending through substantially 180°. These segments lie axially opposite a semi-annular rub ring 28. In the exemplary embodiment, each support segment 30 accommodates four vanes 10. The support segments 30 are individually bolted to the inner casing wall 14 by bolts 15. The rub ring 28 is unsupported in the lower inlet casing, and is thus able to be installed and removed by simply "rolling" the ring into or out of the lower casing.

The radially outer end of each guide vane is formed with an integral extension stem 34 that extends through a bore in the outer casing wall 16, with a reduced diameter portion 36 mounting a drive gear 38. The drive gear 38 meshes with an annular gear rack 40 secured to a drive ring 42 (by, e.g., bolts 44) powered by a hydraulic cylinder (not shown). The drive gear 38 is secured to the shaft portion 36 via a key (or shear pin) and set screw (or other suitable means).

When the guide vanes are to be replaced, they can be removed from the lower inlet casing in the following manner. With the upper half of the inlet casing removed, the individual drive gears 38 are removed, and the inlet guide vanes are then sheared in two, so that the pieces can be removed from inside the lower casing half. Note that, with the gear 38 removed, the upper or radially outer piece, including the stem 34 can be pulled into the casing and then removed, while the lower or radially inner piece can be pulled out of a respective bushing 24.

It will be appreciated that to install new guide vane assemblies without removing the rotor, the inlet guide vane assemblies as described above must be altered.

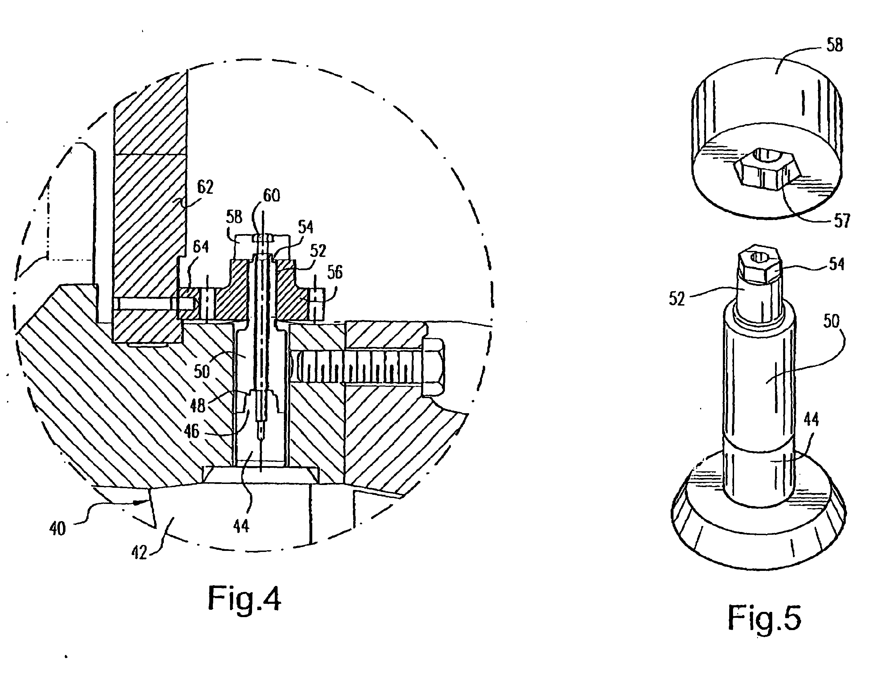

The radially outer end of the new replacement inlet guide vane 40 in accordance with this invention is shown in Figure 4. The radially inner end of the guide vane, and the manner in which it is supported in the inner casing wall 14 remains as in the conventional construction described above, i.e., with a stub shaft 22 received in a bushing 24 seated in a hole 26 in a respective support segment 30. The radially outer end 42 of the vane 40 includes an integral, radial stem 44 having a conical splined portion 46 with flats 48. An intermediate jack shaft 50 has a radially inner end with mating splines and flats, thus providing torque transmission capability between the intermediate jack shaft 50 and the vane 40. An outer end of the jack shaft 50 is formed with a smooth shaft portion 52 that receives the drive gear 56. An outermost end 54 of the jack shaft 50 that extends beyond the drive gear is hex-shaped so that it can receive a similarly hex-shaped recess 57 of an outer stem piece 58, thus providing torque transmission capability between all three components 44, 50 and 58. The outer stem piece 58, drive gear 56 and jack shaft 50 are secured to the vane stem 44 via bolt or screw 60 threadably received in the vane stem 44.

To install the new vanes 40, the rub ring 28 is removed, permitting access to the support segments 30. The segments 30 are removed, progressively from the horizontal joint to a bottom dead center position, from each side of the horizontal joint. The modified inlet guide vanes 40 are loaded into the bore of the outer casing wall 16, one vane at a time, beginning at the bottom dead-center location. Once four inlet guide vanes 40 are loaded into the outer casing 16, one support segment 30 is installed with the stub shaft 22 being inserted into bushing 24 in holes 26. Assembly progresses in this manner, working from bottom dead center toward the horizontal joint until all support segments 30 are installed. After all of the segments 30 have been re-bolted to the casing inner wall 16, the rub ring 28 is re-installed. The intermediate jack shaft 50, drive gear 56 and outer stem piece 58 are then assembled on each guide vane, from outside the casing. Screws or bolts 60 are then threaded into the various vane stems 44 to loosely hold the assemblies together. The upper inlet casing (not shown) is then re-installed, and all of the inlet guide vanes are rotationally aligned to the desired vane angle. The screws 60 are then tightened and the outer stem pieces 58 are welded to the respective drive gears 56, thus completing the torque transmission path between the drive ring 62, rack 64, drive gears 56 and vanes 40.

It will be appreciated that by having a multi-piece vane assembly, installation in the limited space between the lower inlet casing and the rotor is possible.

At the same time, the required torque transmission path is established for uniformly adjusting all vane angles simultaneously.

It will also be appreciated that while normally all of the inlet guide vanes would be replaced, the removal and installation technique as described herein may also be used to replace a single worn or damaged blade.

## Claims

1. A method of replacing an inlet guide vane (10) from a lower inlet casing (12) of a compressor, the lower inlet casing adapted to be secured to an upper inlet casing at a horizontal joint, and after removal of the upper half of the inlet casing but with a rotor (20) of the compressor remaining in place, wherein the inlet guide vane (10) is supported between radially inner and outer walls (14, 16) of the lower inlet casing, and further wherein the inlet guide vane (10) is formed with an integral stem (22) that extends radially through the outer wall (16) and supports a drive gear (56) on its outer end that engages an annular gear rack (40), the method comprising:
a) removing the gear (56) on the radially outer end of the integral stem (22) of the inlet guide vane;
b) shearing the inlet guide vane (10) into two cut portions;
c) removing the cut portions from inside the lower inlet casing (12); and
d) replacing said inlet guide vane (10) by modified inlet guide vanes (40), each having a two-piece stem assembly (44,50) that enables installation without removal of the rotor (20).

2. The method of claim 1 wherein steps a), b) and c) are repeated for each inlet guide vane (10) in the lower inlet casing (12), starting from one or both sides of the horizontal joint.

3. The method of claim 1 wherein a radially inner end (22) of the inlet guide vane (10) is supported in a bushing (24) provided in one of a plurality of removable segments (30) secured to the radially inner wall of the lower inlet casing.

4. An adjustable inlet guide vane assembly comprising:
an inlet guide vane (40) having a cylindrical stub (22) at a radially inner end thereof and a relatively short integral stem (44) at a radially outer end thereof; wherein said inlet guide vane (40) comprises a two-piece stem assembly (44,50) that enables installation without removal of a rotor (20), and
a jack shaft (50) adapted for connection at a radially inner end thereof to a radially outer end of said integral stem (44) such that torque applied to said jack shaft (50) is transmitted to said vane (40), a radially outer end of the jack shaft (50) adapted to receive a drive gear (56).

5. The adjustable inlet guide vane assembly of claim 4 including an outer stem piece (62) engagable with said drive gear (56) and with said jack shaft (50), such that torque applied to said jack shaft (50) is transmitted to said vane (40).

6. The adjustable inlet guide vane assembly of claim 5 wherein a portion (52) of said jack shaft is smooth so as to slidably receive the drive gear (56).

7. The adjustable inlet guide vane assembly of claim 4 in combination with a lower inlet casing (12) of a compressor, wherein radially inner ends (22) of a plurality of said vanes are seated in one or more segments (30) fixed to an inner wall (14) of the lower inlet casing.

8. The adjustable inlet guide vane assembly of claim 7 wherein said jack shaft (50) extends through an outer casing wall (16) and a drive gear (56) is seated on said jack shaft, and an outer stem piece (58) is seated on said jack shaft and welded to said drive gear.

9. The adjustable inlet guide vane assembly of claim 8 including a bolt (60) extending radially between the outer stem piece (58) and the integral stem (44).

## Patentansprüche

1. Verfahren zum Ersetzen einer Eintrittsleitschaufel (10) aus einem unteren Eintrittsgehäuse (12) eines Verdichters, wobei das untere Eintrittsgehäuse so angepasst ist, dass es an einer horizontalen Verbindungsstelle an einem oberen Eintrittsgehäuse befestigt ist, und dass nach dem Abnehmen der oberen Hälfte des Eintrittsgehäuses jedoch ein Rotor (20) des Verdichters an Ort und Stelle bleibt, wobei die Eintrittsleitschaufel (10) zwischen einer radialen Innen- und einer radialen Außenwand (14, 16) des unteren Eintrittsgehäuses gelagert ist, ferner die Eintrittsleitschaufel (10) mit einer integrierten Spindel (22) ausgebildet ist, die radial durch die Außenwand (16) verläuft und an ihrem äußeren Ende ein in eine ringförmige Zahnstange (40) eingreifendes Antriebszahnrad (56) trägt, und wobei das Verfahren folgende Schritte umfasst:
a) Entfernen des Zahnrads (56) am radialen äußeren Ende der integrierten Spindel (22) der Eintrittsleitschaufel;
b) Schneiden der Eintrittsleitschaufel (10) in zwei Schnittteile;
c) Entfernen der Schnittteile aus dem Inneren des unteren Eintrittsgehäuses (12); und
d) Ersetzen der Eintrittsleitschaufel (10) durch modifizierte Eintrittsleitschaufeln (40), die jeweils eine zweiteilige Spindelbaugruppe (44,50) aufweisen, die eine Installation ohne Ausbau des Rotors (20) ermöglicht.

2. Verfahren nach Anspruch 1, **dadurch gekennzeichnet, dass** die Schritte a), b) und c), beginnend auf einer oder beiden Seiten der horizontalen Verbindungsstelle, für jede Eintrittsleitschaufel (10) im unteren Eintrittsgehäuse (12) wiederholt werden.

3. Verfahren nach Anspruch 1, **dadurch gekennzeichnet, dass** ein radiales inneres Ende (22) der Eintrittsleitschaufel (10) in einer Lagerbuchse (24) gelagert ist, die in einem von mehreren demontierbaren Segmenten (30) bereitgestellt ist, die an der radialen Innenwand des unteren Eintrittsgehäuses befestigt sind.

4. Verstellbare Eintrittsleitschaufelbaugruppe, die Folgendes umfasst:
eine Eintrittsleitschaufel (40) mit einem zylindrischen Stumpf (22) an ihrem radialen inneren Ende und mit einer relativ kurzen integrierten Spindel (44) an ihrem radialen äußeren Ende, wobei die
Eintrittsleitschaufel (40) eine zweiteilige Spindelbaugruppe (44,50) umfasst, die eine Installation ohne Ausbau eines Rotors (20) ermöglicht; und
eine Zwischenwelle (50), die zur Verbindung ihres radialen inneren Endes mit einem radialen äußeren Ende der integrierten Spindel so angepasst ist, dass ein auf die Zwischenwelle (50) wirkendes Drehmoment auf die Schaufel (40) übertragen wird, wobei ein radiales äußeres Ende der Zwischenwelle (50) zur Aufnahme eines Antriebszahnrads (56) angepasst ist.

5. Verstellbare Eintrittsleitschaufelbaugruppe nach Anspruch 4, die ein äußeres Spindelstück (62) aufweist, das mit dem Antriebszahnrad (56) und mit der Zwischenwelle (50) so in Eingriff gebracht werden kann, dass ein auf die Zwischenwelle (50) wirkendes Drehmoment auf die Schaufel (40) übertragen wird.

6. Verstellbare Eintrittsleitschaufelbaugruppe nach Anspruch 5, **dadurch gekennzeichnet, dass** ein Bereich (52) der Zwischenwelle glatt ist, um das Antriebszahnrad (56) reibungslos aufzunehmen.

7. Verstellbare Eintrittsleitschaufelbaugruppe nach Anspruch 4 in Kombination mit einem unteren Eintrittsgehäuse (12) eines Verdichters, **dadurch gekennzeichnet, dass** die radialen inneren Enden (22) von mehreren der Schaufeln in einem oder mehreren Segmenten (30) sitzen, die an einer Innenwand (14) des unteren Eintrittsgehäuses befestigt sind.

8. Verstellbare Eintrittsleitschaufelbaugruppe nach Anspruch 7, **dadurch gekennzeichnet, dass** die Zwischenwelle (50) durch eine Gehäuseaußenwand (16) verläuft, ein Antriebszahnrad (56) auf der Zwischenwelle sitzt und ein äußeres Spindelstück (58) auf der Zwischenwelle sitzt und an das Antriebszahnrad geschweißt ist.

9. Verstellbare Eintrittsleitschaufelbaugruppe nach Anspruch 8, die einen radial zwischen dem äußeren Spindelstück (58) und der integrierten Spindel (44) verlaufenden Bolzen enthält.

## Revendications

1. Procédé pour remplacer une aube de guidage d'entrée (10) située dans un carter inférieur d'entrée (12) d'un compresseur, le carter inférieur d'entrée étant conçu pour être fixé à un carter supérieur d'entrée au niveau d'un joint horizontal, et après enlèvement de la moitié supérieure du carter d'entrée mais un rotor (20) du compresseur restant néanmoins en place, l'aube de guidage d'entrée (10) étant supportée entre des parois radialement intérieure et extérieure (14, 16) du carter inférieur d'entrée, et en outre l'aube de guidage d'entrée (10) étant pourvue d'une tige solidaire (22) qui passe radialement à travers la paroi extérieure (16) et soutient à son extrémité supérieure un pignon d'entraînement (56) qui est en prise avec une crémaillère dentée annulaire (40), le procédé comprenant des étapes consistant à :
a) démonter le pignon (56) à l'extrémité radialement extérieure de la tige solidaire (22) de l'aube de guidage d'entrée ;
b) découper l'aube de guidage d'entrée (10) en deux parties coupées ;
c) retirer les parties coupées de l'intérieur du boîtier inférieur d'entrée (12) ; et
d) remplacer ladite aube de guidage d'entrée (10) par des aubes de guidage d'entrée modifiées (40), chacune ayant un ensemble de tige en deux parties (40, 50) permettant l'installation sans le démontage du rotor (20).

2. Procédé selon la revendication 1, dans lequel les étapes a), b) et c) sont répétées pour chaque aube de guidage d'entrée (10) dans le carter inférieur d'entrée (12), à partir d'un seul ou des deux côtés du joint horizontal.

3. Procédé selon la revendication 1, dans lequel une extrémité radialement intérieure (22) de l'aube de guidage d'entrée (10) est supportée dans un manchon (24) disposé dans l'un d'une pluralité de segments amovibles (30) fixés à la paroi radialement intérieure du carter inférieur d'entrée.

4. Système réglable d'aube de guidage d'entrée, comprenant :
une aube de guidage d'entrée (40) ayant un embout cylindrique (22) à une extrémité radialement interne de celle-ci et une tige solidaire relativement courte (44) à une extrémité radialement externe de celui-ci, ladite aube de guidage d'entrée (40) comportant un ensemble de tige en deux parties (40, 50) qui permet une installation sans démontage d'un rotor (20), et
un arbre (50) de vérin conçu pour être accouplé, à une extrémité radialement interne de celui-ci, avec une extrémité radialement externe de ladite tige solidaire (44) de façon qu'un couple appliqué audit arbre (50) de vérin soit transmis à ladite aube (40), une extrémité radialement externe de l'arbre (50) de vérin étant conçue pour recevoir un pignon d'entraînement (56).

5. Ensemble d'aube de guidage d'entrée réglable selon la revendication 4, comprenant un élément extérieur (62) de tige pouvant coopérer avec ledit pignon d'entraînement (56) et avec ledit arbre (50) de vérin, de façon que le couple appliqué audit arbre (50) de vérin soit transmis à ladite aube (40).

6. Ensemble d'aube de guidage d'entrée réglable selon la revendication 5, dans lequel une partie (52) dudit arbre de vérin est lisse de manière à recevoir de façon coulissante le pignon d'entraînement (56).

7. Ensemble d'aube de guidage d'entrée réglable selon la revendication 4, en combinaison avec un carter inférieur d'entrée (12) d'un compresseur, des extrémités radialement internes (22) d'une pluralité desdites aubes étant logées dans un ou plusieurs segments (30) fixés à une paroi interne (14) du carter inférieur d'entrée.

8. Ensemble d'aube de guidage d'entrée réglable selon la revendication 7, dans lequel ledit arbre (50) de vérin passe à travers une paroi extérieure (16) de carter et un pignon d'entraînement (56) est logé sur ledit arbre de carter, et une partie extérieure (58) de tige est logée sur ledit arbre de vérin et soudée audit pignon d'entraînement.

9. Ensemble d'aube de guidage d'entrée réglable selon la revendication 8, comportant un boulon (60) s'étendant radialement entre la partie extérieure (58) de tige et la tige solidaire (44).
